# EUROPEAN PATENT SPECIFICATION

(11) **EP 3 550 982 B1**
(45) Date of publication and mention of the grant of the patent: **20.11.2024**
(21) Application number: 17825131.0
(22) Date of filing: 06.12.2017
(51) Int. Cl.: A22B 5/00, A22C 17/00, A22C 21/00, A22C 25/18

(54) **A METHOD OF PROCESSING A FOOD OBJECT**
VERFAHREN ZUM BEARBEITEN EINES LEBENSMITTELOBJEKTS
PROCÉDÉ DE TRAITEMENT D'UN OBJET ALIMENTAIRE

(30) Priority: 06.12.2016 DK PA201670965
(43) Date of publication of application: 16.10.2019
(73) Proprietor: Marel Iceland EHF, 210 Gardabaer (IS)
(72) Inventor: THORODDSEN, Gunnar Atli, 107 Reykjavík (IS); GUDJONSDOTTIR, Stella, 101 Reykjavík (IS); ADALSTEINSSON, Sigurdur Halldor, 112 Reykjavik (IS); THORSTEINSSON, Tómas, 200 Kopavogi (IS)
(74) Representative: Inspicos P/S
(86) International application number: PCT/EP2017/081643
(87) International publication number: WO 2018/104373

(56) References cited:
- EP-A1- 3 081 090
- WO-A2-02/43502
- WO-A2-2016/008926

## Description

### FIELD OF THE INVENTION

The present invention relates to a method of processing a food object while the food object is being conveyed.

### BACKGROUND OF THE INVENTION

Imaging equipment such as X-ray devices are becoming more and more important within the food industry. One implementation is to use X-ray devices in processing fish fillets, where the acquired X-ray data after passing through the fish fillets are used as an operation parameter for operating a cutting device, e.g. a high pressure water jet cutter, in cutting the fish fillets (or any other food product) into smaller pieces. If the X-ray device, however, detects an undesired object, e.g. bones, the whole fish fillet will not be cut but rejected and sent to a rework station where typically an operator manually removes the undesired object. Subsequently, the processed fish fillet is recirculated into the X-ray device, but this recirculation is typically performed manually. The problem with this approach is that finding the undesired object can be a tedious and time consuming process. This approach also leads to excessive handling of the raw material.

EP3081090 discloses a cutting apparatus comprising a cutter (103) arranged above a gap extending across a conveyor belt. An imaging system produces image data of the food items, and a computer system is adapted to process said image data to generate operation parameters for operating movement of a cutter.

WO02/43502 discloses a method of detecting material desired to be removed from a workpiece comprising scanning the workpiece; determining existence of undesirable material in the workpiece based on the scanning and if it is determined that undesirable material exists, performing a selectable step of cutting out a portion of the workpiece that contains the undesirable material.

### SUMMARY OF THE INVENTION

It would be advantageous to achieve an improved solution in processing food objects where the throughput is increased such that not the whole object needs to be rejected if an undesired object is detected.

In general, the invention preferably seeks to mitigate, alleviate or eliminate one or more of the above mentioned disadvantages singly or in any combination. In particular, it may be seen as an object of the present invention to provide an improved method of processing food objects that solves the above mentioned problems, or other problems, of the prior art.

According to a first aspect of the invention, a method is provided according to claim 1.

Accordingly, the food object will not be treated differently depending on whether such undesired objects are detected or not and therefore the time needed to convey the food object is utilized in performing the cutting step. Thus, valuable time is saved which enhances the throughput. The food object may by any type of a food object, such as, but not limited to, a fish fillet, a piece of meat, e.g. poultry meat etc.

Also, the fact that it is now known which of the smaller food pieces contains the undesired object(s), only that particular one (or more) smaller food piece(s) may be removed from the remaining food object and rejected and sent to e.g. a rework station where typically an operator manually removes the undesired object. Thus, less raw material will be rejected (instead of rejecting the whole food object), which facilitates looking for the undesired objects meaning that less time will be spent on the rework and thus the overall throughput is further enhanced. The undesired object may include, but is not limited to, bones, bloodspots, gapings, or nematodes.
In one embodiment, said step of cutting the food object comprises the step of determining a pattern based on the image data, and performing the cutting in accordance with the pattern.

The pattern could be determined dynamically in accordance to said acquired image data for each time a food object is processed, i.e. a new pattern is generated for each new food object. In that way, depending on e.g. the size and/shape and/or thickness, the cutting of the food object is determined, preferably aiming at maximizing the yield.

In one embodiment, said image data comprises X-ray data obtained by means of exposing the food object with an X-ray beam and processing the intensities of the X-ray beam after penetrating through the food object. In that way, undesired objects such as bones, metal and the like may be detected. Moreover, the detected intensities may be processed to estimate the weight of the food object, which may be used as an additional operation parameter in cutting the food object into e.g. fixed portions.

In one embodiment, the method further comprises automatically separating those smaller food pieces containing the undesired objects from the food object. This may e.g. be performed using a robotic system comprising a robotic arm, where the location of the smaller food piece or pieces containing undesired objects is used as a control signal to the robotic system for automatically removing these smaller food piece or pieces containing said undesired object(s) from the remaining part of the food object.

Another alternative to automatically separating those smaller food pieces containing the undesired objects from the food object may comprise using a conveyor assembly, e.g. slidable conveyor or conveyor part, a pivotable conveyor or conveyor part or the like, which is well known to a person skilled in the art, where the location of the smaller food piece or pieces containing undesired objects is used as a control signal to the conveyor assembly, e.g. to control the temporal opening between adjacent conveyors. Thus, only the piece or pieces containing undesired objects is rejected.

In one embodiment, the step of determining, based on the acquired image data, whether the food object contains undesired objects comprises detecting whether detected objects are above a pre-defined size range, wherein, if the detected objects exceed the pre-defined size range, the detected objects are considered to be undesired objects. Accordingly, it may be decided that if such objects are e.g. bones, that the length of the bones may be the pre-defined size range, e.g. all bones being 1mm or less are not considered to be undesired objects, whereas all bones above 1mm are considered to be undesired objects. The width of the detected objects may also be considered as an additional or a dominant factor in this pre-defined size range.

According to another aspect of the invention a system is provided according to claim 10.

The imaging means may as an example selected from one or more of the following: an X-ray apparatus, Near Infrared (NIR) device, a RGB, hyperspectral imaging and fluorescence, a digital camera.

The cutting means may as an example comprise a high pressure water cutter or any type of cutting blades, e.g. circular rotation cutting blade.

In one embodiment, the system further comprises an automatic removing device for utilizing the identification of which of the smaller food pieces contain the undesired objects in automatically removing these smaller food pieces from the remaining part of the food object. The automatic removing device could be a robotic system comprising at least one robotic arm or a conveyor assembly.

In general the various aspects of the invention may be combined and coupled in any way possible within the scope of the invention. These and other aspects, features and/or advantages of the invention will be apparent from, and elucidated with reference to the embodiments described hereinafter.

### BRIEF DESCRIPTION OF THE DRAWINGS

Embodiments of the invention will be described, by way of example only, with reference to the drawings, in which
figure 1 shows a flowchart of an embodiment of a method according to the present invention of processing a food object while the food object is being conveyed,
figures 2 and 3 show two examples of where a fish fillet, a white fish, has been automatically cut into smaller pieces, and
figure 4 shows a block diagram of a system according to the present invention.

### DESCRIPTION OF EMBODIMENTS

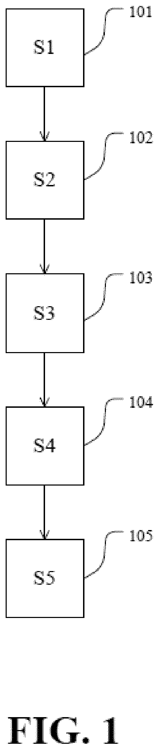

Figure 1 shows a flowchart of an embodiment of a method according to the present invention of processing a food object while the food object is being conveyed. The food object may be a fish fillet, poultry meat, beef, pork and the like. In the following, it will be assumed that the food object is a fish fillet.

In step (S1) 101 image data of the food object is acquired. The image data includes in one embodiment X-ray data obtained by means of exposing the food object with an X-ray beam and processing the intensities of the X-ray beam after penetrating through the food object. This is especially suitable in detecting bones, metal objects or any other undesired objects in the fish fillet.

The image data may also include digital data obtained by means of an inspection device such as a digital camera and where said undesired objects are selected from one or more of bloodspots, nematodes or gapings.

In step (S2) 102 the food object is cut into smaller food pieces, e.g. loin part, belly part, tail part etc. This may be performed based on pre-fixed cutting patterns. In a preferred embodiment this cutting is determined dynamically in accordance to said acquired image data. This means that depending on the size/shape/geometry of the food object the cutting is determined accordingly.

In step (S3) 103 it is determined, based on the acquired image data, whether the food object contains undesired objects.

In step (S4) 104, in case such undesired objects in (S4) are detected, it is identified which of the smaller food pieces contain the undesired objects.

In step (S5) 105, the method may further comprise automatically separating those smaller food pieces containing the undesired objects from the food object. This may be performed via any type of a reject conveyor device or conveyor assembly such as by arranging two conveyors in an end-to-end arrangement and temporarily withdrawing one of the ends and create a gap there between through which the food pieces containing the undesired objects may be dropped down to a reject area or to a rework station where e.g. an operator may manually process the rejected piece. This may also be done using any type of a robotic arm, or an operator may be informed via any type of a device, e.g. via a display, which of the food piece(s) contain the undesired objects.

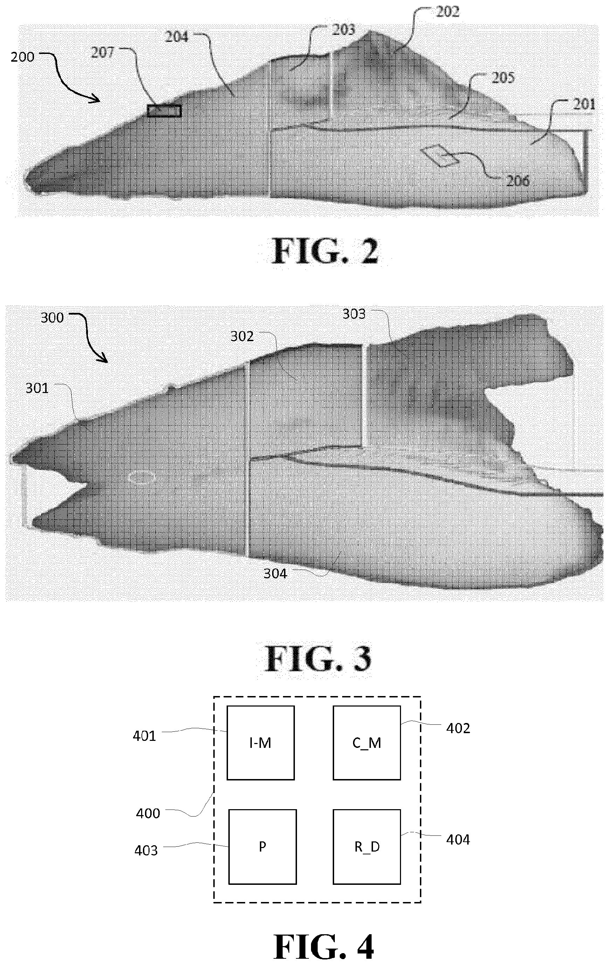

Figure 2 shows one example where a fish fillet 200, a white fish, has been automatically cut into smaller pieces and where the cut includes cutting around the pin bones 205 in the fish fillet, where the pieces include a loin part 201, a belly part 202 and belly portion 203, and a tail part 204. This cutting may e.g. be performed using a high pressure water jet, but other cutting tools well known to a skilled person in the art may of cause be used.

The image date comprise X-ray data that are processed and based thereon it is decided how to cut this particular fish fillet depending on the size/shape of the fish fillet, i.e. the cutting is performed in a dynamic way. Moreover, the X-ray data are processed to determine whether any of the cut pieces contain undesired objects, such as bones or any other undesired fragments. In this case, the X-ray data indicates that a small piece of a bone is within the box 207 (in addition to the pin bone area 205) in the tail part 204, and another bone within the box 206 at the loin part. In this case, the size of these bone fragments are determined and based thereon it is determined whether or not they should be considered as being undesired objects. As an example, a bone of 2 mm length or less may be considered as not being undesired object, whereas bone fragments above 2 mm is considered as being an undesired object. In this particular case, only the size of the bone within box 206 may be categorized as being an undesired object and thus only this loin part is to be removed/rejected to a rework area where e.g. an operator will easily detect the undesired object, in this case the detected bone, as discussed above, instead of removing the whole fish fillet to e.g. said rework station.

Figure 3 shows another fillet 300 that has been cut into similar pieces 301 - 304, but where no undesired object has been detected and thus no piece needs to be rejected.

Figure 4 depicts a block diagram of a system 400 according to the present invention for processing a food object while the food object is being conveyed by a conveying means. The system comprises an image means (I_M) 401 for acquiring image data of the food object, a cutting means (C_M) 402 for cutting the food object into smaller food pieces, a processor (P) 403 for determining, based on the acquired image data, whether the food object contains undesired objects, and in case such undesired objects are detected, identifying which of the smaller food pieces contain the undesired objects. The system further comprises an automatic removing device (R_D) 404 for utilizing the identification of which of the smaller food pieces contain the undesired objects in automatically removing these smaller food pieces from the remaining part of the food object. The automatic removing device (R_D) 404 may be a robot, or a reject structure embedded in a conveyor.

The imaging means may comprise one or more of the following: an X-ray apparatus, a Near Infrared (NIR) device, a RGB, hyperspectral imaging and fluorescence, a digital camera. The cutting means may in one embodiment comprise a high pressure water cutter.

The automatic removing device may comprise a conveyor assembly the automatically, e.g. two conveyors arranged in an end-to-end arrangement (one end ends where the other one starts) where e.g.one end of the conveyors is connected to a moving mechanism that allows a temporal opening between the two conveyors, where in response to a control signal indicating which of the smaller food pieces contain said undesired objects (e.g. bone), the temporal opening is created and the smaller food piece (or pieces) containing the smaller food object(s) is rejected and e.g. recirculated to e.g. an operator that may manually remove e.g. the bone therefrom, and even recirculate the processed piece back into the image means where it may be detected if the undesired object has fully been removed or not.

The scope of protection of the current invention is defined by the appended claims.

## Claims

1. A method of processing a food object while the food object is being conveyed, comprising:
• acquiring image data of the food object (101),
• cutting the food object into smaller food pieces (102),
• determining, based on the acquired image data, whether the food object contains undesired objects (103), and in case such undesired objects are detected,
• identifying which of the smaller food pieces contain the undesired objects (104),
**characterised in that** the food object is not treated differently whether undesired objects are detected or not.

2. The method according to claim 1, wherein said step of cutting the food object comprises the step of determining a pattern based on the image data, and performing the cutting in accordance with the pattern.

3. The method of claim 2, wherein the pattern is determined dynamically in accordance with a set of image data for each received food object.

4. The method according to any of the preceding claims, wherein said image data comprise X-ray data obtained by means of exposing the food object with an X-ray beam and processing the intensities of the X-ray beam after penetrating through the food object.

5. The method according to any of the preceding claims, further comprising automatically separating those smaller food pieces containing the undesired objects from the food object (105) based on the identification of which of the smaller food pieces contain the undesired objects (104).

6. The method according to any of the preceding claims, wherein said undesired objects include one or more of the following: bones, bloodspots, gapings, or nematodes.

7. The method according to any of the preceding claims, where said acquired image data comprise digital data obtained by means of an inspection device such as a digital camera, RGB hyperspectral imaging and fluorescence, and where said undesired objects are selected from one or more of: bloodspots, nematodes or gapings.

8. The method according to any of the preceding claims, wherein the food object is a fish fillet.

9. The method according to any of the preceding claims, wherein the step of determining, based on the acquired image data, whether the food object contains undesired objects comprises detecting whether detected objects are above a pre-defined size range, wherein if the detected objects exceed the pre-defined size range the detected objects are considered to be undesired objects.

10. A system for processing a food object while the food object is being conveyed by a conveying means, comprising:
• image means for acquiring image data of the food object (101),
• cutting means for cutting the food object into smaller food pieces (102),
• a processor for:
∘ determining, based on the acquired image data, whether the food object contains undesired objects (103), and in case such undesired objects are detected,
∘ identifying which of the smaller food pieces contain the undesired objects (104),
**characterised in that** the food object is not treated differently whether undesired objects are detected or not.

11. The system according to claim 10, wherein the imaging means is selected from one or more of the following:
an X-ray apparatus,
a Near Infrared (NIR) device,
a RGB hyperspectral imaging and fluorescence,
a digital camera.

12. The system according to claim 10 or 11, wherein the cutting means comprises a high pressure water cutter.

13. The system according to any of the claims 10 to 12, further comprising automatic removing device for utilizing the identification of which of the smaller food pieces contain the undesired objects in automatically removing these smaller food pieces from the remaining part of the food object.

14. The system according to claim 13, wherein the automatic removing device is selected from one or more of the following: a robotic system comprising at least one robotic arm or a conveyor assembly.

## Patentansprüche

1. Verfahren zum Verarbeiten eines Nahrungsmittelgegenstandes, während der Nahrungsmittelgegenstand gefördert wird, umfassend:
- Erfassen von Bilddaten des Nahrungsmittelgegenstandes (101),
- Zerschneiden des Nahrungsmittelgegenstandes in kleinere Nahrungsmittelstücke (102),
- Bestimmen, basierend auf den erfassten Bilddaten, ob der Nahrungsmittelgegenstand unerwünschte Objekte enthält (103), und falls derartige unerwünschte Objekte erkannt werden,
- Feststellen, welche der kleineren Nahrungsmittelstücke unerwünschte Objekte enthalten (104),
**dadurch gekennzeichnet, dass** der Nahrungsmittelgegenstand nicht unterschiedlich behandelt wird, unabhängig davon, ob unerwünschte Objekte erkannt werden oder nicht.

2. Verfahren nach Anspruch 1, wobei der Schritt des Zerschneidens des Nahrungsmittelgegenstandes den Schritt des Bestimmens eines Musters basierend auf den Bilddaten und des Durchführens des Zerschneidens gemäß dem Muster umfasst.

3. Verfahren nach Anspruch 2, wobei das Muster dynamisch gemäß einem Satz von Bilddaten für jeden empfangenen Nahrungsmittelgegenstand bestimmt wird.

4. Verfahren nach einem beliebigen der vorhergehenden Ansprüche, wobei die Bilddaten Röntgendaten umfassen, die durch Bestrahlen des Nahrungsmittelgegenstandes mit einem Röntgenstrahl und Verarbeiten der Intensitäten des Röntgenstrahls nach dem Durchdringen des Nahrungsmittelgegenstands gewonnen werden.

5. Verfahren nach einem beliebigen der vorhergehenden Ansprüche, ferner umfassend das automatische Trennen dieser kleineren Nahrungsmittelstücke, welche die unerwünschten Objekte enthalten, von dem Nahrungsmittelgegenstand (105), basierend auf der Feststellung, welche der kleineren Nahrungsmittelstücke die unerwünschten Objekte enthalten (104).

6. Verfahren nach einem beliebigen der vorhergehenden Ansprüche, wobei die unerwünschten Objekte eines oder mehrere der folgenden umfassen: Knochen, Blutflecken, Spalten oder Nematoden.

7. Verfahren nach einem beliebigen der vorhergehenden Ansprüche, wobei die erfassten Bilddaten digitale Daten umfassen, die mittels einer Prüfvorrichtung wie etwa einer Digitalkamera, RGB-Hyperspektralbildgebung und Fluoreszenz, gewonnen werden, und wobei die unerwünschten Objekte aus einem oder mehreren ausgewählt werden von: Blutflecken, Nematoden oder Spalten.

8. Verfahren nach einem beliebigen der vorhergehenden Ansprüche, wobei der Nahrungsmittelgegenstand ein Fischfilet ist.

9. Verfahren nach einem beliebigen der vorhergehenden Ansprüche, wobei der Schritt des Bestimmens, basierend auf den erfassten Bilddaten, ob der Nahrungsmittelgegenstand unerwünschte Objekte enthält, Detektieren, ob erkannte Objekte über einem vordefinierten Größenbereich liegen, umfasst, wobei, wenn die erkannten Objekte den vordefinierten Größenbereich überschreiten, die erkannten Objekte als unerwünschte Objekte betrachtet werden.

10. System zum Verarbeiten eines Nahrungsmittelgegenstandes während der Nahrungsmittelgegenstand durch ein Fördermittel gefördert wird, aufweisend:
- ein Bildmittel zum Erfassen von Bilddaten des Nahrungsmittelgegenstandes (101),
- ein Schneidemittel zum Zerschneiden des Nahrungsmittelgegenstandes in kleinere Nahrungsmittelstücke (102),
- einen Prozessor zum:
- Bestimmen, basierend auf den erfassten Bilddaten, ob der Nahrungsmittelgegenstand unerwünschte Objekte enthält (103), und falls derartige unerwünschte Objekte erkannt werden,
- Feststellen, welche der kleineren Nahrungsmittelstücke die unerwünschten Objekte enthalten (104),
**dadurch gekennzeichnet, dass** der Nahrungsmittelgegenstand nicht unterschiedlich behandelt wird, unabhängig davon, ob unerwünschte Objekte erkannt werden oder nicht.

11. System nach Anspruch 10, wobei das Bildgebungsmittel ausgewählt wird aus einem oder mehreren der folgenden:
einer Röntgenvorrichtung,
einer Nahinfrarot-Vorrichtung (NIR-Vorrichtung),
einer RGB-Hyperspektralbildgebung und Fluoreszenz,
einer Digitalkamera.

12. System nach Anspruch 10 oder 11, wobei das Schneidemittel einen Hochdruck-Wasserschneider aufweist.

13. System nach einem beliebigen der Ansprüche 10 bis 12, ferner aufweisend eine automatische Entfernungsvorrichtung zum Verwenden der Feststellung, welche der kleineren Nahrungsmittelstücke die unerwünschten Objekte enthalten, beim automatischen Entfernen dieser kleineren Nahrungsmittelstücke von dem übrigen Teil des Nahrungsmittelgegenstandes.

14. System nach Anspruch 13, wobei die automatische Entfernungsvorrichtung aus einem oder mehreren der folgenden ausgewählt wird: einem Robotersystem, das mindestens einen Roboterarm aufweist, oder einer Fördereranordnung.

## Revendications

1. Procédé de traitement d'un objet alimentaire pendant le transport de l'objet alimentaire, comprenant :
• l'acquisition de données d'image de l'objet alimentaire (101),
• la découpe de l'objet alimentaire en petits morceaux d'aliment (102),
• la détermination, sur la base des données d'image acquises, si l'objet alimentaire contient des objets indésirables (103), et dans le cas où de tels objets indésirables sont détectés,
• l'identification duquel des petits morceaux d'aliments contient les objets indésirables (104),
**caractérisé en ce que** l'objet alimentaire n'est pas traité différemment si des objets indésirables sont détectés ou non.

2. Procédé selon la revendication 1, dans lequel ladite étape de découpe de l'objet alimentaire comprend l'étape de détermination d'un motif sur la base des données d'image, et d'exécution de la découpe conformément au motif.

3. Procédé selon la revendication 2, dans lequel le motif est déterminé dynamiquement conformément à un ensemble de données d'image pour chaque objet alimentaire reçu.

4. Procédé selon l'une quelconque des revendications précédentes, dans lequel lesdites données d'image comprennent des données de rayons X obtenues en exposant l'objet alimentaire à un faisceau de rayons X et en traitant les intensités du faisceau de rayons X après avoir pénétré à travers l'objet alimentaire.

5. Procédé selon l'une quelconque des revendications précédentes, comprenant en outre la séparation automatique des petits morceaux d'aliments contenant les objets indésirables de l'objet alimentaire (105) sur la base de l'identification de ceux des petits morceaux d'aliments qui contiennent les objets indésirables (104).

6. Procédé selon l'une quelconque des revendications précédentes, dans lequel lesdits objets indésirables comprennent un ou plusieurs des éléments suivants : os, taches sanguines, trous ou nématodes.

7. Procédé selon l'une quelconque des revendications précédentes, dans lequel lesdites données d'image acquises reçoivent des données numériques obtenues au moyen d'un dispositif d'inspection tel qu'une caméra numérique, une imagerie hyperspectrale RGB et une fluorescence, et dans lequel lesdits objets indésirables sont sélectionnés parmi un ou plusieurs des éléments suivants : taches sanguines, nématodes ou trous.

8. Procédé selon l'une quelconque des revendications précédentes, dans lequel l'objet alimentaire est un filet de poisson.

9. Procédé selon l'une quelconque des revendications précédentes, dans lequel l'étape consistant à déterminer, sur la base des données au d'image acquises, si l'objet alimentaire contient des objets indésirables comprend la détection si des objets détectés sont au-dessus d'une plage de dimensions prédéfinie, sachant que, si les objets détectés dépassent la plage de dimensions prédéfinie, les objets détectés sont considérés comme des objets indésirables.

10. Système de traitement d'un objet alimentaire pendant que l'objet alimentaire est transporté par un moyen de transport, comprenant :
• des moyens d'imagerie pour acquérir des données d'image de l'objet alimentaire (101),
• des moyens de coupe pour découper l'objet alimentaire en morceaux alimentaires plus petits (102),
• un processeur pour :
∘ déterminer, sur la base des données d'image acquises, si l'objet alimentaire contient des objets indésirables (103), et dans le cas où de tels objets indésirables sont détectés,
∘ identifier lesquels des petits morceaux d'aliments contiennent les objets indésirables (104),
**caractérisé en ce que** l'objet alimentaire n'est pas traité différemment si des objets indésirables sont détectés ou non.

11. Système selon la revendication 10, dans lequel le moyen d'imagerie est choisi parmi un ou plusieurs des éléments suivants :
un appareil à rayons X,
un dispositif infrarouge proche (NIR),
une imagerie et une fluorescence hyperspectrales RGB,
une caméra numérique.

12. Système selon la revendication 10 ou 11, dans lequel le moyen de coupe comprend un dispositif de coupe à eau à haute pression.

13. Système selon l'une quelconque des revendications 10 à 12, comprenant en outre un dispositif de retrait automatique pour utiliser l'identification de ceux des petits morceaux d'aliments contenant les objets indésirables en retirant automatiquement ces petits morceaux d'aliments de la partie restante de l'objet alimentaire.

14. Système selon la revendication 13, dans lequel le dispositif d'enlèvement automatique est sélectionné parmi un ou plusieurs des éléments suivants : un système robotique comprenant au moins un bras robotique ou un ensemble convoyeur.
